# EUROPEAN PATENT APPLICATION

(11) **EP 3 716 447 A1**
(43) Date of publication of application: **30.09.2020**
(21) Application number: 19211179.7
(22) Date of filing: 25.11.2019
(51) Int. Cl.: H02K 3/52, H02K 5/20, H02K 9/19

(54) **GENERATORS WITH FLAT WIRE WINDINGS AND METHODS OF MAKING GENERATORS WITH FLAT WIRE WINDINGS**

(30) Priority: 25.03.2019 US 201916363614
(71) Applicant: Hamilton Sundstrand Corporation, Charlotte, NC 28217-4578 (US)
(72) Inventor: COLDWATE, Joseph K., Roscoe, IL 61073 (US); PATEL, Dhaval, Loves Park, IL 61111 (US); WILKINSON, Andrew R., Cherry Valley, IL 61016 (US)
(74) Representative: Dehns

(57) **Abstract**

A core (104) for an electric machine (100) includes a core body (112) with a tooth (114) arranged along a rotation axis (110), a winding (108) with a flat wire coil (116) fixed to the core body and seated on the tooth of the core body, and a flat wire jumper (120). The flat wire jumper is supported by the core body and is connected to the flat wire coil to place the flat wire coil in electrical communication with flat wire coils of the winding. Methods of making cores with flat wire jumpers and generators having cores with flat wire jumpers are also described.

## Description

### BACKGROUND

The subject matter disclosed herein generally relates to generators, and more particularly to generators having winding coils formed from flat wire.

Electrical systems, such as aircraft electrical systems, commonly include generators. The generators provide electrical power to electrical devices connected to the electrical systems, generally by rotating magnetic elements relative to a stationary winding. As the magnetic elements rotate flux is communicated between the magnetic elements and the stationary winding, which induces a flow of current in the stationary winding for powering electrical devices connected to the stationary winding.

In some generators the magnetic flux is generated using winding coils. The winding coils are typically formed from round wire, such as wire having a circular cross-sectional area. Use of round wire simplifies the manufacture of such generators as the windings need not be formed individually prior to installation and thereafter connected to one another electrically in series. This avoids the need to interconnect the winding faying surfaces with one another, interconnections which would otherwise be time consuming and labor intensive to form economically and reliably.

Such generators and methods of making generators having generally been satisfactory for their intended purpose. However, there remains a need in the art for improved generators and methods of making generators. The present disclosure provides a solution to this need.

### BRIEF SUMMARY

According to one embodiment a core for an electric machine is provided. The core includes a core body with a tooth arranged along a rotation axis, a winding with a flat wire coil fixed to the core body, and a flat wire jumper. The flat wire coil is seated on the tooth of the core body. The flat wire jumper is supported by the core body and is connected to the flat wire coil to place the flat wire coil in electrical communication with flat wire coils of the winding distributed circumferentially about the core body.

In addition to one or more of the features described above, or as an alternative, further embodiments may include that the flat wire jumper is arranged radially between the flat wire coil and the rotation axis.

In addition to one or more of the features described above, or as an alternative, further embodiments may include that the flat wire jumper has a U-shaped body with a first end and a second end, the flat wire coil connected to one of the first end and the second end.

In addition to one or more of the features described above, or as an alternative, further embodiments may include that the flat wire jumper has a cross-sectional profile that is rectangular.

In addition to one or more of the features described above, or as an alternative, further embodiments may include that the flat wire coil comprises a plurality of flat wire turns with cross-sectional profiles that are rectangular.

In addition to one or more of the features described above, or as an alternative, further embodiments may include a ferrule fixing the flat wire jumper to the flat wire coil.

In addition to one or more of the features described above, or as an alternative, further embodiments may include that the ferrule defines a pocket with a rectangular shape for seating the flat wire jumper.

In addition to one or more of the features described above, or as an alternative, further embodiments may include that the flat wire coil has a flat wire lead, wherein the flat wire lead overlaps the jumper within the ferrule.

In addition to one or more of the features described above, or as an alternative, further embodiments may include that the ferrule is thermally crimped or welded to the jumper and a flat wire lead of the flat wire coil.

In addition to one or more of the features described above, or as an alternative, further embodiments may include an end cap defining a cutout seated on the core body and radially supporting the flat wire jumper.

In addition to one or more of the features described above, or as an alternative, further embodiments may include wherein the end cap circumferentially encloses the flat wire jumper.

In addition to one or more of the features described above, or as an alternative, further embodiments may include that the flat wire coil has a generator lead extending therefrom, wherein the generator lead extends through the cutout defined by the end cap.

In addition to one or more of the features described above, or as an alternative, further embodiments may include a coolant source connected to the end cap for cooling the winding.

In addition to one or more of the features described above, or as an alternative, further embodiments may include a a stator extending circumferentially about the core body.

In addition to one or more of the features described above, or as an alternative, further embodiments may include a shaft supported for rotation about the rotation axis, the core body seated on the shaft.

In addition to one or more of the features described above, or as an alternative, further embodiments may include that the electric machine is a generator.

According to another embodiment a generator is provided. The generator includes a core as described above, a ferrule, an end cap, a shaft, and a stator. The flat wire jumper is arranged radially between the flat wire coil and the rotation axis. The ferrule fixes the flat wire jumper to the flat wire coil. The end cap defines a cutout seated on the core body and radially supporting the flat wire jumper. The shaft is supported for rotation about the rotation axis, the core body being seated on the shaft. The stator extends about the core body.

In addition to one or more of the features described above, or as an alternative, further embodiments may include that the ferrule defines a pocket with a rectangular shape for seating the flat wire jumper; wherein the flat wire coil has a flat wire lead, wherein the flat wire lead overlaps the jumper within the ferrule; and wherein the ferrule is thermally crimped or welded to the jumper and a flat wire lead of the flat wire coil.

According to a further embodiment a method of making a core for an electric machine is provided. The method includes arranging a core body with tooth along a rotation axis, fixing a winding with a flat wire coil fixed to the core body, wherein the flat wire coil is seated on the tooth of the core body, supporting a flat wire jumper within the core body, and connecting the flat wire jumper to the flat wire coil electrically in series with flat wire coils of the winding.

In addition to one or more of the features described above, or as an alternative, further embodiments may include that the connecting the flat wire jumper to the flat wire coil comprises seating the flat wire jumper in a ferrule, seating a flat wire lead of the flat wire coil in the ferrule, thermally crimping or welding the ferrule to the flow wire jumper and the flat wire lead, and folding the flat wire jumper radially such that the flat wire jumper is disposed within the core body of the core between the rotation axis and the flat wire coil.

Technical effects of embodiments of the present disclosure improve the producibility of generators with windings from wires without round cross-sections. In certain embodiments a thermal crimping operation in cooperation with flat ferrules is employed to join the coils forming the generator winding, limiting the time required to interconnect the coils forming the winding. In accordance with certain embodiments rotor end plates are also provided to structurally support the joints, limiting stress on the joint and improving the reliability of the generator winding during service.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF DRAWINGS

The following descriptions should not be considered limiting in any way. With reference to the accompanying drawings, like elements are numbered alike:
FIG. 1 is a schematic view of an electrical system having a generator constructed in accordance with the present disclosure, showing the generator providing power to electrical loads in an aircraft electrical system;
FIG. 2 is a cross-sectional end view of the generator of FIG. 1, showing a core of the generator seating a winding having flat wire coils and supported for rotation relative to a stator about a rotation axis;
FIG. 3 is another cross-sectional end view of the generator of FIG. 1, showing flat wire jumpers connected to the flat wire coils of the winding by ferrules;
FIG. 4 is yet another cross-sectional end view of the generator of FIG. 1, showing an end cap supporting the flat wire jumpers and connected to a coolant source for providing a flow of coolant to the winding;
FIGS. 5 and 6 are plan and cross-sectional views of the jumper of FIG. 4, showing the shape of the jumper and the shape of the cross-sectional profile of the jumper, respectively;
FIGS. 7 and 8 are plan and cross-sectional views of the ferrule of FIG. 4, showing the shape of the ferrule and the shape of a pocket defined by the ferrule and seating the jumper, respectively; and
FIG. 9 is a block diagram of a method of making a core for an electric machine, showing steps of the method.

### DETAILED DESCRIPTION

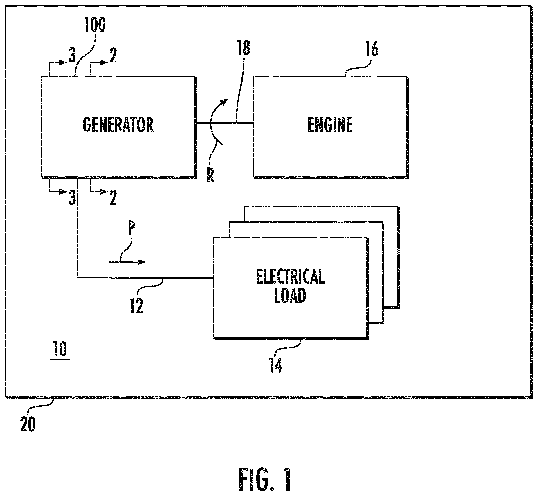

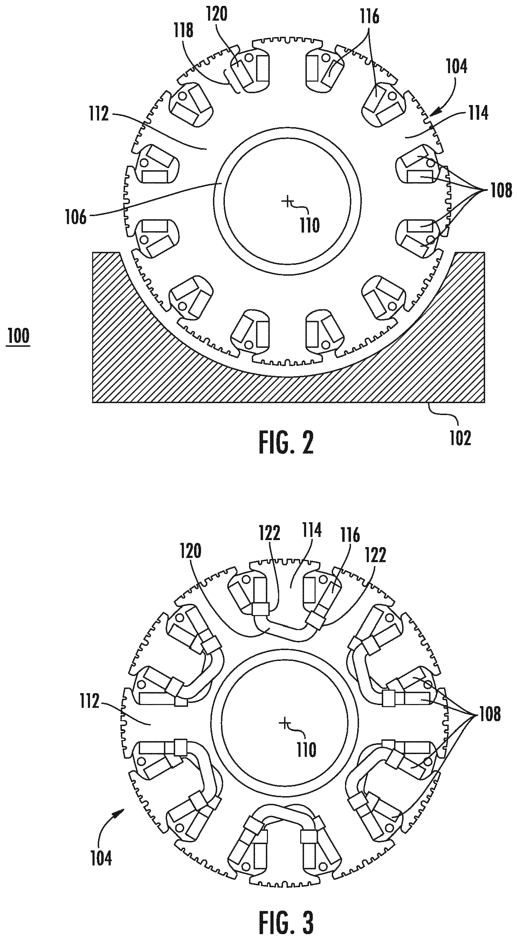

Reference will now be made to the drawings wherein like reference numerals identify similar structural features or aspects of the subject disclosure. For purposes of explanation and illustration, and not limitation, a partial view of an exemplary embodiment of a core for an electric machine in accordance with the present disclosure is shown in FIG. 1 and is designated generally by reference character 100. Other embodiments of cores, electric machines, and methods of making cores for electric machines in accordance with the present disclosure, or aspects thereof, are provided in FIGS. 2-9, as will be described. The systems and methods described herein can be used for generators in aircraft electrical systems, though the present disclosure is not limited to aircraft electric systems or to any particular type of electric machine in general.

Referring to FIG. 1, an electrical system 10 is shown. The electrical system, 10 includes a generator-type electric machine 100, a power distribution bus 12, and one or more electrical load 14. The generator-type electric machine 100 is operatively associated with an engine 16 and receives mechanical rotation R from the engine 16 to generate electric power P. The electric power P is communicated by the power distribution bus 12 to the one or more electrical load 14. As shown in FIG. 1 the electrical system 10 is an aircraft electrical system 10 and the engine 16 is an aircraft main engine or auxiliary power unit connected to the generator-type electric machine 100 by an accessory gearbox 18 and carried by an aircraft 20. Although shown and described herein in the context of an aircraft electrical system 10 with a generator-type electric machine 100, it is to be understood and appreciated that other types of electrical systems, e.g., terrestrial vehicles and fixed electrical systems, and electric machines, e.g., motors, can also benefit from the present disclosure.

With reference to FIG. 2, the electric machine 100 is shown. The electric machine 100 includes a stator 102, a core 104, a shaft 106, and a winding 108. The shaft 106 is supported for rotation about a rotation axis 110 relative to the stator 102. The core 104 includes a core body 112. The core body 112 is seated on the shaft 106 and has a plurality of teeth, e.g., a tooth 114, distributed circumferentially about the core body 112. Each of the teeth extend radially from the core body 112 and are circumferentially spaced apart from one another by gaps.

The winding 108 is fixed to the core body 112 and includes a plurality of flat wire coils, e.g., a flat wire coil 116, the plurality of flat wire coils connected to one another electrically in series with one another. It is contemplated that the winding 108 can be a field winding, an exciter winding, or a control winding cooperative with permanent magnets supported by the core 104, as suitable for an intended application. As shown in FIG. 2 the winding 108 includes twelve (12) flat wire coils. This is for illustration purposes only and is non-limiting. As will be appreciated by those of skill in the art in view of the present disclosure, winding 108 can have more than twelve (12) flat wire coils or fewer than twelve (12) flat wire coils, as suitable for an intended application.

The flat wire coil 116 includes a plurality of flat wire turns 118. Each of the plurality of flat wire turns 118 have a cross-sectional profile 121 that is generally rectangular in shape. In this respect each of the flat wire turns 118 has a width that is greater than a height of the cross-sectional profile 121 and is stacked radially within a respective gap defined between circumferentially adjacent teeth. As will be appreciated by those of skill in the art in view of the present disclosure, the plurality of flat wire turns 118 impart certain mechanical and magnetic advantages to the electric machines. For example, the plurality of flat wire turns 118 limit the load exerted on the core body 112 during rotation, limiting stress within the core body 112 during rotation associated with centrifugal forces. The plurality of flat wire turns 118 also allow the teeth of the core body 112 to present a relatively large pole arc to the stator 102, which limits density of magnetic flux communicated between the core body 112 and the stator 102 and/or increase the peak magnetic flux capable of being communicated between the core body 112 and the stator 102 during operation for a given pole count and rotor diameter. As will also be appreciated by those of skill in the art in view of the present disclosure, the plurality of flat wire turns 118 can add complexity to the fabrication of the core 104 due to the need to seat the flat wire coils individually on the core body 112, and thereafter interconnect the flat wire coils electrically with one another. To limit the labour and time necessary to connect the flat wire coils with one another the core 104 includes a plurality of jumpers, e.g., a flat wire jumper 120 (shown in FIG. 3), and a plurality of ferrules, e.g., a ferrule 122 (shown in FIG. 3).

With reference to FIG. 3, the core 104 for the electric machine 100 (shown in FIG. 1), is shown. The core 104 includes the core body 112 with the tooth 114 and arranged along the rotation axis 110. The winding 108 with the flat wire coil 116 is fixed to the core body 112, the flat wire coil 116 seated on the tooth 114 of the core body 112. The flat wire jumper 120 is supported by the core body 112 and is connected to the flat wire coil 116 such that the flat wire coil 116 is in electrical communication with the flat wire coils of the winding 108, which are distributed circumferentially about the core body 112.

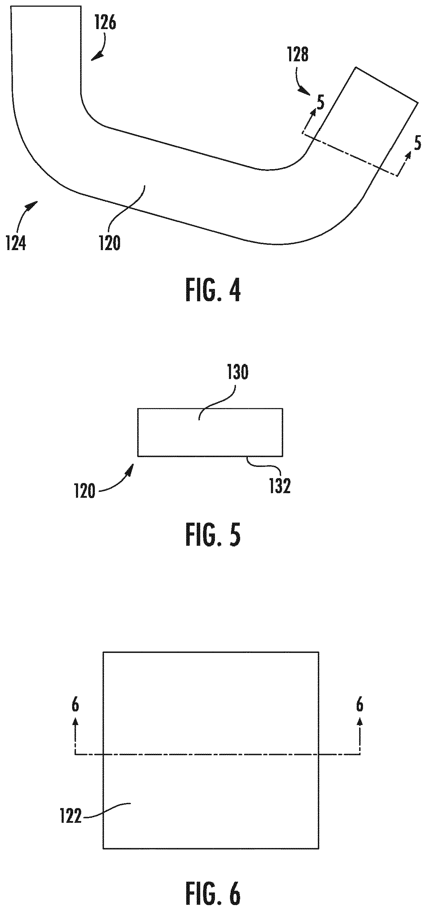

The flat wire jumper 120 is arranged radially between the between the flat wire coil 116 and the rotation axis 110. As shown in FIG. 4, the flat wire jumper 120 has a U-shaped body 124 with a first end 126 and an opposite second end 128. As indicated in FIG. 4 and shown in FIG. 5, the flat wire jumper 120 has a cross-sectional profile 130 with a rectangular shape 132. In certain embodiments the cross-sectional profile 130 can be substantially identical to a cross-section profile of one or more of the flat wire turns 118, for example by punching the flat wire jumper 120 and the one or more of the flat wire turns 118 from a common piece of stock. This simplifies connecting the flat wire jumper 120 to the one or more of the flat wire turns 118.

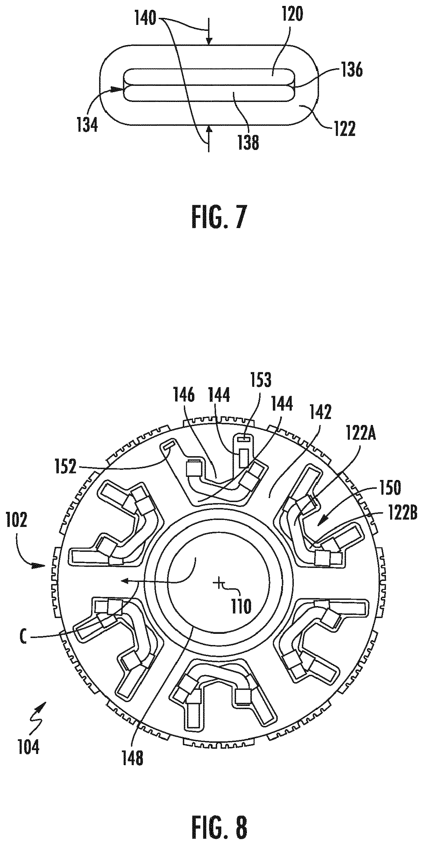

The ferrule 122 (shown in FIG. 3) fixes the flat wire jumper 120 to the flat wire coil 116. In this respect, as indicated in FIG. 6 and shown in FIG. 7, the ferrule 122 defines a pocket 134 with a rectangular shape 136 for seating the flat wire jumper 120 in ferrule 122. It is contemplated that a portion of the flat wire jumper 120 overlay a flat wire lead portion 138 of the flat wire coil 116 disposed within the ferrule 122. So overlapped the ferrule 122 can be thermally crimpled 140 to fix the flat wire lead portion 138 and the flat wire jumper 120 within the pocket 134 of the ferrule 122. Thermally crimping the ferrule 122 in turn establishes an electrical connection (i.e. a conductive joint) between the flat wire coil 116 and flat wire jumper 120 by removing insulation from the end of the flat wire jumper 120 and the flat wire lead portion 138 disposed within the pocket 132 of the ferrule 122 during the thermal crimping operation. As will be appreciated by those of skill in the art in view of the present disclosure, this eliminates the need to make a brazed connection between the flat wire coil 116 and another flat wire coil of the winding 108. It is also contemplated that the ferrule 122 can be welded to the flat wire jumper 120 and the flat wire lead portion 138, as suitable for an intended application.

With reference to FIG. 8, an end cap 142 of the core 104 is shown. The end cap 142 is fixed to the core body 112, defines a cutout 144, and circumferentially encloses the flat wire jumper 120. It is contemplated that the end cap 142 radially support the flat wire jumper 120. In this respect the flat wire jumper 120 is arranged within the cutout 144 defined by the end cap 142 such that the flat wire jumper 120 is arranged radially between the rotation axis 110 and flat wire coil 116. It is contemplated that the end cap 142 radially support the flat wire jumper 120, a bracing portion 146 extending radially inward toward the U-shaped body 124 (shown in FIG. 4) to limit radially outward movement of the flat wire jumper 120, such as can occur at the urging of centrifugal force during rotation of the core body 112. As will appreciated by those of skill in art in view of the present disclosure, this limits the load exerted on the flat wire jumper 120 and associated stress therein. As also shown in FIG. 8, a coolant source 148 can be in communication with the end cap 142 for issuing a flow of coolant C to the end cap 142, limiting fatigue from thermal cycling and additionally enhancing reliability by limiting accumulated fatigue within the connection made by the flat wire jumper 120 and the winding 108.

It is contemplated that the cutout 144 be sized to accommodate a first flat wire jumper 122A and a second flat wire jumper 122B axially overlapped with one another, as shown in FIG. 8 with reference numeral 150. Axially overlapping the first flat wire jumper 122A and the second flat wire jumper 122B allows the electric machine 100 to have a relative compact axial length. It is also contemplated that the flat wire coil 116 have a generator lead 152 extending from the flat wire coil 116. As shown in FIG. 8, the generator lead 152 extends axially through the cutout 144 of the end cap 142, which allows the winding 108 to be in electrical communication with the stator 102 (shown in FIG. 2) through a slip ring arrangement or a rotary transformer, as appropriate for an intended application.

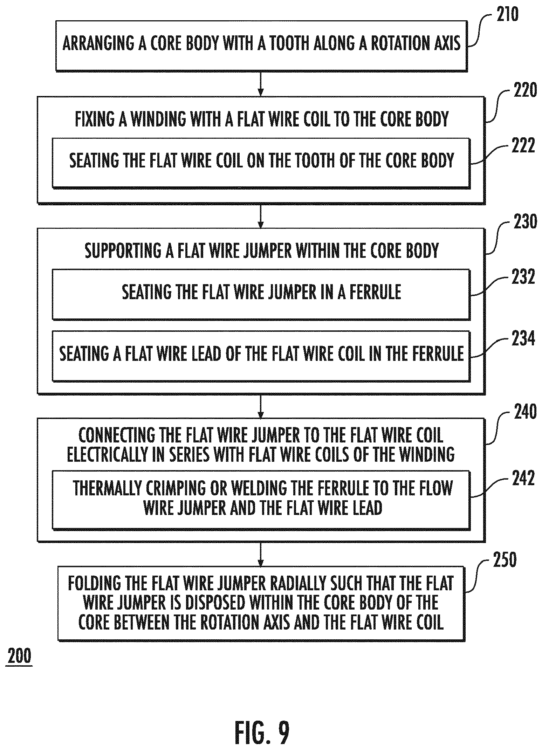

With reference to FIG. 9, a method 200 of making a core for electric machine, e.g., the core 104 (shown in FIG. 2), is shown. As shown with box 210, a core body, e.g., the core body 112 (shown in FIG. 2), is arranged along a rotation axis, e.g., the rotation axis 110 (shown in FIG. 2). A winding with one or more flat wire coils is fixed to the core body, e.g., the flat wire coil 116 (shown in FIG. 2) of the winding 108 (shown in FIG. 2), as shown with box 220. It is contemplated that the flat wire coil be seated on a tooth of the core body, e.g., the tooth 114 (shown in FIG. 2).

As shown with box 230, a flat wire jumper is supported within the core body, e.g., the flat wire jumper 120 (shown in FIG. 3). The flat wire jumper is seated (by insertion) into a ferrule, e.g., the ferrule 122 (shown in FIG. 3), as shown with box 232. A flat wire lead of the flat wire coil is also seated in the ferrule, e.g., the flat wire lead portion 138 (shown in FIG. 3), as shown with box 234.

As shown with box 240, the flat wire jumper is then connected to the flat wire coil electrically in series with the flat wire jumper as well as will the other flat wire coils forming the winding. The electrical connection can be made by applying heat and pressure in a thermal crimping operation, as shown with box 242. The electrical connection can also be made by welding, as also shown with box 242.

As shown box 250, the flat wire jumper is next folded radially inward with respect to the rotation axis such that the flat wire jumper is disposed within the core body of the core. As will be appreciated by those of ordinary skill in the art in view of the present disclosure, thermally crimping the flat wire jumper prior to folding the jumper radially simplifies assembly as the jumper and ferrule components are easily accessed prior to folding the jumper radially. It is contemplated that the flat wire jumper be disposed radially between the rotation axis and the flat wire coil. It is also contemplated that the flat wire jumper be supported radially. Radial support can be provided by an end cap fixed to the core body, e.g., the end cap 142 (shown in FIG. 8), such as by folding the flat wire jumper such that a bracing portion, e.g., the bracing portion 146 (shown in FIG. 8), of the end cap radially constrains movement of the jumper.

Windings with coils formed from flat wire, i.e., from conductors having non-circular cross-sectional areas, can provide certain advantages to electric machines. For example, flat wire can limit stress within the rotor structure during rotation. Flat wire can also allow the generator to be constructed with teeth that present a relatively large pole arc to the stator, limiting flux density and/or providing relatively high flux communication capability for given tooth count and rotor size. However, winding having coils formed from flat wire typically presents challenges to generator manufacture, such as the need to interconnect the coils to one another in series to form the winding, which can be labour intensive and/or present reliability liabilities during generator service.

In embodiments described herein flat wires are electrically joined using a flat wire jumper and a ferrule having a rectangular opening to electrically connect the coils to one another. In certain embodiments the flat wires are joined to one another by the ferrule using a thermal crimping process, limiting time and/or improving reliability in comparison to alternative joining methods, such as brazing. In accordance with certain embodiments, an end plate having apertures arrange to support the joint is employed to limit the centrifugal loading imposed on the joints during rotation, improving reliability of the generator by limiting stress exerted on the joints during generator operation.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A core (104) for an electric machine (100), comprising:
a core body (112) with a tooth (114) arranged along a rotation axis (110);
a winding (108) with a flat wire coil (116) fixed to the core body, the flat wire coil seated on the tooth of the core body; and
a flat wire jumper (120) supported by the core body, wherein the flat wire jumper is connected to the flat wire coil to place the flat wire coil in electrical communication with flat wire coils of the winding distributed circumferentially about the core body.

2. The core as recited in claim 1, wherein the flat wire jumper is arranged radially between the flat wire coil and the rotation axis.

3. The core as recited in any preceding claim, wherein the flat wire jumper has a U-shaped body with a first end and a second end, the flat wire coil connected to one of the first end and the second end.

4. The core as recited in any preceding claim, wherein the flat wire jumper has a cross-sectional profile that is rectangular.

5. The core as recited in any preceding claim, wherein the flat wire coil comprises a plurality of flat wire turns with cross-sectional profiles that are rectangular.

6. The core as recited in any preceding claim, further comprising a ferrule fixing the flat wire jumper to the flat wire coil.

7. The core as recited in claim 6, wherein the ferrule defines a pocket with a rectangular shape for seating the flat wire jumper, and/or wherein the ferrule is thermally crimped or welded to the jumper and a flat wire lead of the flat wire coil.

8. The core as recited in claim 6 or 7, wherein the flat wire coil has a flat wire lead, wherein the flat wire lead overlaps the jumper within the ferrule.

9. The core as recited in any preceding claim, further comprising an end cap defining a cutout seated on the core body and radially supporting the flat wire jumper, optionally wherein the end cap circumferentially encloses the flat wire jumper; and/or wherein the flat wire coil has a generator lead extending therefrom, wherein the generator lead extends through the cutout defined by the end cap.

10. The core as recited in claim 9, further comprising a coolant source connected to the end cap for cooling the winding.

11. The core as recited in any preceding claim, further comprising a shaft supported for rotation about the rotation axis, the core body seated on the shaft.

12. An electric machine (100) comprising the core as recited in any preceding claim, further comprising a stator extending circumferentially about the core body; optionally wherein the electric machine is a generator.

13. A generator, comprising:
a core (104) as recited in any of claims 1 to 11, wherein the flat wire jumper (120) is arranged radially between the flat wire coil (116) and the rotation axis (110);
a ferrule (122) fixing the flat wire jumper to the flat wire coil;
an end cap (142) defining a cutout (144) seated on the core body and radially supporting the flat wire jumper;
a shaft (106) supported for rotation about the rotation axis, the core body seated on the shaft; and
a stator (102) extending about the core body; optionally wherein the ferrule defines a pocket (134) with a rectangular shape for seating the flat wire jumper; wherein the flat wire coil has a flat wire lead, wherein the flat wire lead overlaps the jumper within the ferrule; and wherein the ferrule is thermally crimped or welded to the jumper and a flat wire lead of the flat wire coil.

14. A method of making a core (104) for an electric machine (100), comprising:
arranging a core body (112) with a tooth (114) along a rotation axis (110);
fixing a winding (108) with a flat wire coil (1160 fixed to the core body, wherein the flat wire coil is seated on the tooth of the core body;
supporting a flat wire jumper (120) within the core body; and
connecting the flat wire jumper to the flat wire coil electrically in series with flat wire coils of the winding.

15. The method as recited in claim 14, wherein connecting the flat wire jumper to the flat wire coil comprises:
seating the flat wire jumper in a ferrule;
seating a flat wire lead of the flat wire coil in the ferrule;
thermally crimping or welding the ferrule to the flow wire jumper and the flat wire lead; and
folding the flat wire jumper radially such that the flat wire jumper is disposed within the core body of the core between the rotation axis and the flat wire coil.
